# EUROPÄISCHE PATENTSCHRIFT

(11) **EP 1 565 290 B1**
(45) Veröffentlichungstag und Bekanntmachung des Hinweises auf die Patenterteilung: **27.06.2007**
(21) Anmeldenummer: 03773654.3
(22) Anmeldetag: 20.10.2003
(51) Int. Cl.: B23Q 17/22, G05B 19/401, G01B 11/02

(54) **VERFAHREN ZUM BEFESTIGEN EINES WERKZEUGS IN EINEM WERKZEUGFUTTER**
METHOD FOR FASTENING A TOOL WITHIN A TOOL CHUCK
PROCEDE DE FIXATION D'UN OUTIL DANS UN MANDRIN DE SERRAGE

(30) Priorität: 21.10.2002 DE 10249072
(43) Veröffentlichungstag der Anmeldung: 24.08.2005
(73) Patentinhaber: E. Zoller GmbH & Co. KG, 71691 Freiberg/Neckar (DE)
(72) Erfinder: PFAU, Christian, 74321 Bietigheim-Bissingen (DE); ZOLLER, Christoph, ZOLLER Shanghai, Ltd., Bldg. C,, Min Hang District, Shanghai 201108 (CN)
(74) Vertreter: Daub, Thomas
(86) Internationale Anmeldenummer: PCT/EP2003/011593
(87) Internationale Veröffentlichungsnummer: WO 2004/037486

(56) Entgegenhaltungen:
- EP-A- 1 103 338
- EP-A- 1 310 323
- WO-A-02/18093
- WO-A-03/002298
- WO-A-03/106105

## Beschreibung

### Stand der Technik

Die Erfindung betrifft ein Verfahren und eine Vorrichtung zum Befestigen eines Werkzeugs in einem Werkzeugfutter gemäss dem Oberbegiff des Anspruchs 1 bzw. 23 (siehe WO-02/18093 bzw. EP-1103338-A).

Es sind Verfahren zum kraftschlüssigen Spannen von Schaftwerkzeugen, insbesondere Zerspanungswerkzeugen, in entsprechenden Werkzeugfuttern zur Aufnahme in CNC-Bearbeitungsmaschinen bekannt. Bei einem dieser bekannten Verfahren, dem so genannten Einschrumpfen eines Werkzeugs in ein Werkzeugfutter, wird eine Werkzeugaufnahme um eine Aufnahmeöffnung des Futters, beispielsweise eine zylindrische Aufnahmebohrung, mit heißer Luft oder mit Hilfe von Induktionsströmen erwärmt, so dass sich die Werkzeugaufnahme um die Aufnahmebohrung ausdehnt. Die hierdurch bedingte Vergrößerung der Aufnahmebohrung ermöglicht ein Einführen des Werkzeugs, wobei unmittelbar nach der Abkühlung der Werkzeugaufnahme ein kraftschlüssiger Verbund zwischen Schaft und Werkzeugaufnahme hergestellt ist.

Es sind außerdem Verfahren bekannt, bei denen das Werkzeug hinsichtlich der Ist-Position einer oder mehrerer Schneiden des Werkzeugs vermessen wird und das Werkzeug auf der Grundlage der Messdaten in einem Werkzeugfutter zur Einspannung positioniert wird.

Der Erfindung liegt die Aufgabe zugrunde, ein Verfahren anzugeben, bei dem mit hoher Sicherheit gewährleistet ist, dass ein Werkzeug besonders zuverlässig und exakt in ein Werkzeugfutter eingespannt ist.

Diese Aufgabe wird durch ein Verfahren und eine Vorrichtung nach dem Patentanspruch 1 bzw. 23 gelöst. Weitere Ausgestaltungen ergeben sich aus den Unteransprüchen.

Vorteile der Erfindung

Mit dem erfindungsgemäßen Verfahren nach Anspruch 1 kann die Ist-Position des Werkzeugs im Werkzeugfutter überprüft werden, beispielsweise durch Vergleich der Ist-Position mit einer Soll-Position. Eventuelle Abweichungen von der Soll-Position können erfasst und dokumentiert werden, um bei einer späteren Bearbeitung eines Werkstücks mit dem Werkzeug zu hochgenauen Bearbeitungsergebnissen zu kommen, indem die Abweichungen bei der Führung des Werkzeugs im Werkstück berücksichtigt werden. Es ist auch möglich, beim Einschrumpfungsverfahren aufgetretene Fehler aufzudecken. Konnte das Werkzeug beispielsweise nicht ohne das Werkzeugfutter zu berühren in die Werkzeugaufnahme des Werkzeugfutters eingeführt werden und wurde hierbei die Ist-Position des Werkzeugs unbeabsichtigterweise verändert, so wird dieser Fehler vor einem Einsatz des Werkzeugs aufgedeckt und kann korrigiert werden. Des Weiteren ist es möglich, Defekte im Werkzeug oder im Werkzeugfutter, wie Risse, Brüche oder Materialermüdungen, aufzuspüren und einen späteren Bearbeitungsvorgang des Werkzeugs sicherer zu machen. Schließlich können durch Temperaturschwankungen bedingte Bewegungen des Werkzeugs im Werkzeugfutter bestimmt werden. Im Laufe des Einschrumpfvorgangs wird das Werkzeugfutter stark erhitzt und wieder abgekühlt. Durch Ausdehnung und Zusammenziehung des Materials des Werkzeugfutters unterliegt das im Werkzeugfutter eingespannte Werkzeug einer nicht unerheblichen temperaturbedingten Bewegung. Thermische Unregelmäßigkeiten, wie beispielsweise eine zu starke Erwärmung des Werkzeugfutters, können somit zu einer Abweichung der Ist-Position des Werkzeugs von seiner Soll-Position führen. Durch das erfindungsgemäße Verfahren werden solche Abweichungen zuverlässig erkannt und können in einem späteren Bearbeitungsvorgang berücksichtigt werden.

Die Bestimmung der Ist-Position des Werkzeugs im Werkzeugfutter kann durch eine mechanische Vermessung, also mit einer Vermessung durch Berührung des Werkzeugs und des Werkzeugfutters mit einem Messmittel, geschehen. Es ist jedoch bevorzugt, die Ist-Position berührungslos, insbesondere mittels einer eine Optik aufweisenden Messvorrichtung, zu bestimmen. Die Messvorrichtung umfasst üblicherweise eine Kamera und eine Auswerteeinheit, die mit der Kamera erfasste Bilder auswertet und mittels vorgegebener Berechnungsmethoden die Ist-Position des Werkzeugs bestimmt. Mit einer solchen Vorrichtung sind in einfacher und effektiver Weise genaue Messungen durchführbar. Beschädigungen durch Kontakte zwischen dem Werkzeug und der Messvorrichtung können sicher vermieden werden.

Die Ist-Position des Werkzeugs wird zweckmäßigerweise über die Ist-Position eines charakteristischen Elements des Werkzeugs, beispielsweise einer Schneide, einer Ecke oder Kante oder einer Spitze, bestimmt. Von der Ist-Position des charakteristischen Elements wird auf die Ist-Position des Werkzeugs rückgeschlossen, oder die Ist-Position des charakteristischen Elements wird selbst als Ist-Position des Werkzeugs angesehen. Die Bestimmung oder Überprüfung der Ist-Position des charakteristischen Elements kann hierbei in Richtung der Einführung des Werkzeugs in die Werkzeugaufnahme und/oder in Radialrichtung bzgl. der Rotationsachse des Werkzeugs erfolgen. Die Bestimmung der Ist-Position des Werkzeugs in Einführungsrichtung ermöglicht die Überprüfung der korrekten Positionierung des Werkzeugs im Werkzeugfutter. Die Bestimmung der Ist-Position des Werkzeugs in Radialrichtung ermöglicht eine Überprüfung des Rundlaufs des Werkzeugs und kann temperaturbedingte Bewegungen und insbesondere Defekte im Werkzeug oder im Werkzeugfutter aufdecken.

Gemäß einer bevorzugten Ausführungsform des erfindungsgemäßen Verfahrens wird die Ist-Position des Werkzeugs während des Einführung des Werkzeugs in das Werkzeugfutter überwacht. Hierdurch kann eine unbeabsichtigte Bewegung des Werkzeugs beim Einführen, ein Verschieben im Werkzeuggreifer oder Verkanten im Werkzeugfutter erkannt werden. Bei der Überwachung der Ist-Position des Werkzeugs während des Einführung ist das charakteristische Element des Werkzeugs zweckmäßigerweise frei zugänglich, so dass die Überwachung mittels eines optischen Sensors erfolgen kann.

Gemäß einer bevorzugten Ausführungsform des erfindungsgemäßen Verfahrens erfolgt die Ermittlung der Ist-Position nach dem Einschrumpfen in Axialrichtung und Radialrichtung des Werkzeugs. Hierdurch ist sowohl die Ist-Position in Einführungsrichtung des Werkzeugs als auch eine Unwucht in Radialrichtung mit hoher Genauigkeit bestimmbar. Beim Überschreiten der Unwucht, also bei einem in Bezug zur Einführungsrichtung oder Achsrichtung über einen bestimmten Wert hinaus schräg eingespannten Werkzeug, kann der Einschrumpfprozess des Werkzeugs in das Werkzeugfutter wiederholt werden.

Zweckmäßigerweise wird die Ist-Position des Werkzeugs bzgl. eines Referenzpunkts auf dem Werkzeugfutter definiert. Der Referenzpunkt kann mit einer Optik bestimmt werden. Bei zahlreichen Anwendungen kann jedoch davon ausgegangen werden, dass der Referenzpunkt durch die Befestigung des Werkzeugfutters in einer Werkzeugaufnahmespindel positionsgenau angeordnet ist, so dass keine weitere Vermessung des Referenzpunkts notwendig ist.

Bevorzugt wird das Werkzeug während des Einschrumpfens von einem Werkzeuggreifer gehalten, der das Werkzeug auch während des Vermessens gehalten hat. Hierdurch kann die Gefahr eines Positionierungsfehlers verringert werden. Zweckmäßigerweise ist der Werkzeuggreifer in der Lage, das Werkzeug um seine Rotationsachse zu drehen, damit das Werkzeug während des Vermessens gedreht und beispielsweise eine Hüllkurve ermittelt werden kann.

Vorteilhafterweise ist das Werkzeugfutter während des Einschrumpfens in einer Spindel befestigt und wird erst nach der Bestimmung der Ist-Position aus der Spindel genommen. Durch das Bestimmen der Ist-Position unmittelbar nach dem Einschrumpfen kann ein Fehler sofort erkannt werden. Außerdem kann die so ermittelte Ist-Position mit einer später ermittelten Ist-Position, beispielsweise nach Abkühlen des Werkzeugfutters, verglichen und so die Zuverlässigkeit des Einspannvorgangs erhöht werden.

In einer zweckmäßigen Ausgestaltung der Erfindung wird die Positionsbestimmung nach einem Abkühlen des Werkzeugfutters unter eine Soll-Temperatur durchgeführt. Hierdurch ist gewährleistet, dass das Werkzeug im Werkzeugfutter nach der Positionsbestimmung keiner temperaturbedingten Bewegung mehr unterliegt. Es ist damit die Ist-Position des Werkzeugs im Werkzeugfutter bestimmbar, die das Werkzeug auch bei einem späteren Bearbeitungsvorgang einnimmt.

Vorteilhafterweise wird eine Anzahl von Werkzeugen in jeweils ein zugeordnetes Werkzeugfutter eingeschrumpft und zusammen mit dem Werkzeugfutter in einem Be- und Entlademagazin abgelegt und anschließend die Ist-Position der Werkzeuge in den Werkzeugfuttern bestimmt. Hierdurch können zuerst eine Anzahl von Werkzeugen in zugehörigen Werkzeugfuttern eingeschrumpft werden und dann die Werkzeuge nach einem Abkühlungsprozess mit dem Werkzeugfutter erneut in eine Aufnahmespindel eingespannt und auf ihre Position hin überprüft werden. Die Aufnahmespindel kann so bereits während des Abkühlens eines Werkzeugfutters zum Einschrumpfen eines nächsten Werkzeugs in ein anderes Werkzeugfutter verwendet werden.

In einer weiteren Ausführungsform der Erfindung wird das Werkzeug im Werkzeugfutter vor dem Einschrumpfen in einer Soll-Position im Werkzeugfutter positioniert. Die Soll-Position ist einem späteren Bearbeitungsprozess angepasst und bezieht sich möglicherweise auf eine Entfernung zwischen einem Referenzpunkt und einem signifikanten Element des Werkzeugs.

Alternativ wird das Werkzeug im Werkzeugfutter zweckmäßigerweise um eine Korrekturgröße entfernt von der Soll-Position positioniert. Durch das Abkühlen des Werkzeugfutters nach dem Einbringen des Werkzeugs wird das vom Werkzeugfutter fest umschlossene Werkzeug um eine kleine Wegstrecke üblicherweise in Richtung der Rotationsachse des Werkzeugs bewegt. Diese durch die thermische Kontraktion des Werkzeugfutters bewirkte Bewegung kann durch die Korrekturgröße gegebenenfalls vollständig ausgeglichen werden, so dass das Werkzeug nach der Abkühlung des Werkzeugfutters in der Soll-Position positioniert ist.

Zur Bestimmung der Korrekturgröße, die vom Grad der Erwärmung des Werkzeugfutters während des Schrumpfprozesses abhängt, ist es vorteilhaft, dass die Temperatur des Werkzeugfutters vor dem Positionieren des Werkzeugs überwacht wird. Außerdem kann durch diese Überwachung die Temperatur des Werkzeugfutters gerade so niedrig eingestellt werden, dass das Werkzeug bei niedriger thermischer Belastung des Werkzeugfutters gerade noch fehlerlos in die Aufnahmeöffnung eingebracht werden kann.

Ein einfacher und schneller Datentransfer zu einer Werkzeugmaschine kann dadurch erreicht werden, dass die Ist-Position nach der Positionsbestimmung auf einen mit dem Werkzeugfutter verbundenen Datenträger geschrieben wird. Der Datenträger kann ein thermisch belastbarer Chip sein, der beispielsweise im oder am Werkzeugfutter integriert ist. Beim Einbringen des Werkzeugfutters mit dem eingeschrumpften Werkzeug in die Werkzeugmaschine können die Daten in besonders einfacher Weise schnell ausgelesen und sicher mit dem Werkzeugfutter verbunden werden.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: den Aufbau einer bevorzugten Vorrichtung zur Durchführung des erfindungsgemäßen Verfahrens in schematischer seitlicher Ansicht,
- Fig. 2: ein einzuschrumpfendes Werkzeug in seitlicher Ansicht,
- Fig. 3: ein Werkzeugfutter in seitlicher Ansicht,
- Fig. 4: ein aus einem Werkzeugfutter und einem eingeschrumpften Werkzeug gebildetes Komplettwerkzeug in seitlicher Schnittansicht.

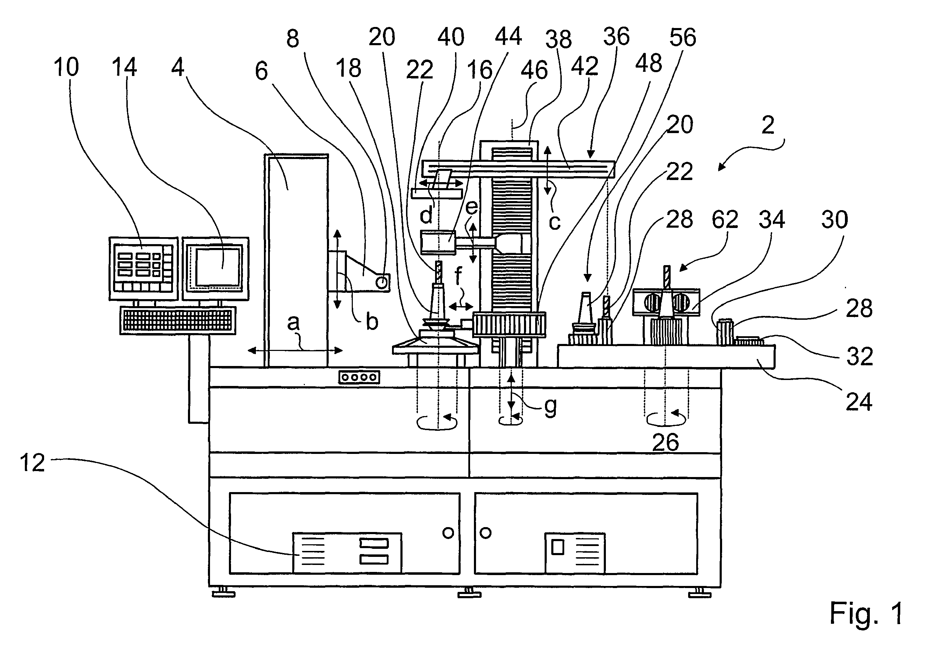

Die in Figur 1 gezeigte Einstell- und Messeinrichtung 2 weist einen in Richtung des Doppelpfeils a verfahrbaren Schlitten 4 auf, auf dem ein Optikträger 6 in Richtung des Doppelpfeils b verfahrbar ist. Der Optikträger 6 trägt eine Kamera bzw. eine Messoptik 8, welche vorzugsweise im Durchlichtverfahren arbeitet. Die Einstell- und Messeinrichtung 2 wird mittels einer Bedieneinheit 10 bedient. Die Bedieneinheit 10 weist vorzugsweise eine Recheneinheit 12 mit Mitteln zur Bildverarbeitung auf. Ein zu vermessendes Werkzeug ist vorzugsweise auf einem Monitor 14 darstellbar.

Eine um eine Drehachse 16 drehbare, CNC-gesteuerte Werkzeugaufnahmespindel 18 dient zur Aufnahme eines Werkzeugfutters 20, in welches ein einzuschrumpfendes Werkzeug 22 einbringbar ist. Ein als Revolver ausgeführtes Be- und Entlademagazin 24 ist um eine Drehachse 26 drehbar ausgeführt und trägt eine Anzahl von Be- und Entladestationen 28, welche jeweils eine Werkzeugaufnahme 30 und eine Aufnahme 32 für ein Werkzeugfutter 20 umfassen. Die Be- und Entladestation 28 ist außerdem mit einer Kühleinheit 34 ausgestattet, in welche das aus dem Werkzeugfutter 20 und dem Werkzeug 22 gebildete Komplettwerkzeug nach dem Einschrumpfen einbringbar ist.

Die Einstell- und Messeinrichtung 2 weist ferner eine CNC-gesteuerte und/oder pneumatisch angetriebene Einbringeinheit 36 mit einem Vertikalschlitten 38 auf. Dieser Vertikalschlitten 38 trägt einen Werkzeuggreifer 40 auf einem Querschlitten 42 und eine Induktionsspule 44. Der Querschlitten 42 ist in Richtung des Doppelpfeils c und der darauf angebrachte Werkzeuggreifer 40 in Richtung des Doppelpfeils d verschiebbar. Der Werkzeuggreifer 40 ist ferner um die Drehachse 16 drehbar ausgebildet. Die Induktionsspule 44 ist in Richtung des Doppelpfeils e verschiebbar, wobei auch denkbar ist, dass sie zusätzlich in Richtung des Doppelpfeils f und/oder drehbar um eine Achse 46 ausgebildet ist.

Die Einbringeinheit 36 weist einen Werkzeugfutterwechsler 48 zur Übertragung von Werkzeugfuttern 20 von dem Be- und Entlademagazin 24 auf die Werkzeugaufnahmespindel 18 und umgekehrt auf. Der Werkzeugfutterwechsler 48 ist um die Achse 46 drehbar und in Richtung des Doppelpfeils g parallel zu der Achse 46 verfahrbar.

Die Durchführung einer bevorzugten Ausführungsform des erfindungsgemäßen Verfahrens ist unter Bezugnahme auf die oben erläuterte Vorrichtung gemäß Figur 1 im Folgenden näher beschrieben.

Zunächst wird ein Werkzeug 22 in eine Aufnahmehülse gegeben, wonach diese beiden Teile in eine entsprechende Aufnahme der Be- und Entladestation 28 gegeben werden. Entsprechend wird ein Werkzeugfutter 20 in eine entsprechende Aufnahme der Be- und Entladestation 28 eingesetzt. Außerdem wird die Identifikationsnummer des Werkzeugs 22 und/oder Daten des Werkzeugs 22, wie Sollmaße, Schrumpfzeit, Schaftdurchmesser etc., manuell oder aus einer Datenbank automatisch in die Recheneinheit 12 eingegeben. Mit Starten des Schrumpfablaufs mittels entsprechender Steuerung der Recheneinheit 12 wird das Be- und Entlademagazin 24 automatisch um seine Drehachse 26 gedreht, so dass das Werkzeugfutter 20 und das Werkzeug 22 in eine Entnahmeposition 56 gelangen. Der Werkzeugfutterwechsler 48 entnimmt das Werkzeugfutter 20 und setzt es mittels einer Drehung um die Achse 46 in die Werkzeugaufnahmespindel 18 ein. Eine in der Werkzeugaufnahmespindel 18 integrierte Werkzeugspanneinrichtung wird automatisch eingeschaltet und fixiert das Werkzeugfutter 20 kraftbetätigt in der Werkzeugaufnahmespindel 18.

Nun fährt der Werkzeuggreifer 40 entlang des Querschlittens 42 und mittels einer vertikalen Verschiebung des Querschlittens 42 zum Werkzeug 22 und entnimmt es der Aufnahmehülse. Das Werkzeug 22 wird mit dem Werkzeuggreifer 40 CNC-gesteuert in eine Warteposition über das eingespannte Werkzeugfutter 20 konzentrisch bezüglich der Drehachse 16 verfahren.

Zu einer ersten Bestimmung der Ist-Position des Werkzeugs 22 wird nun der Schlitten 4 und der Optikträger 6 derart bewegt, dass die Messoptik 8 in den Bereich einer Schneide 58 des zu messenden Werkzeugs 22 gelangt, die als charakteristisches Element des Werkzeugs 22 vermessen wird. Für den Fall, dass die Sollmaße der Schneide 58 nicht bekannt sind, ist zweckmäßigerweise vorgesehen, mit der Messoptik 8 einen automatischen Suchlauf durchzuführen. Sobald die Schneide 58 im Blickfeld der Messoptik 8 liegt, beginnt der Werkzeuggreifer 40 CNC-gesteuert das Werkzeug 22 um die Drehachse 16 zu drehen, um die Schneide 58 optisch scharf zu stellen. Nachdem das geschehen ist, wird die Ist-Position der Schneide 58, und insbesondere der Schneidenspitze, entlang der Längsachse µ-genau ermittelt. Mit den somit zur Verfügung gestellten Längsmaßen des Werkzeugs 22 bzw. der Ist-Positionierung der Schneide 58 und Schneidenspitze ist der Verfahrweg entlang der Drehachse 16 für den Werkzeuggreifer 40 zum Erreichen des für das Werkzeug 22 wesentlichen Sollmaßes, insbesondere bezüglich des Werkzeugfutters 20 oder der Werkzeugaufnahmespindel 18, bekannt.

Nun wird die Induktionsspule 44 um die Werkzeugaufnahmespindel 18 positioniert und eingeschaltet, das Werkzeugfutter 20 wird erwärmt und dehnt sich aus. Die Temperatur des Werkzeugfutters 20 wird mit einem nicht näher dargestellten Sensor überwacht. Bei Erreichen einer Solltemperatur wird die Induktionsspule 44 in der Weise weggefahren, dass das Werkzeug 22 anschließend nach unten fahren kann und ein Schaft 60 des Werkzeugs 22 in das Werkzeugfutter 20 eingeführt wird. Während dieses Einfahrens wird die Schneide 58 des Werkzeugs 22 mittels der Messoptik 8 durch entsprechende Verschiebungen des Schlittens 4 permanent verfolgt und vermessen. Bei Erkennen von Änderungen in der Positionierung, beispielsweise aufgrund einer unbeabsichtigten Verschiebung des Werkzeugs 22 innerhalb des Werkzeuggreifers 40, kann der komplette Befestigungsvorgang abgebrochen werden und das Werkzeug 22 automatisch wieder in das Be- und Entlademagazin 24 gestellt und entsprechend gekennzeichnet werden.

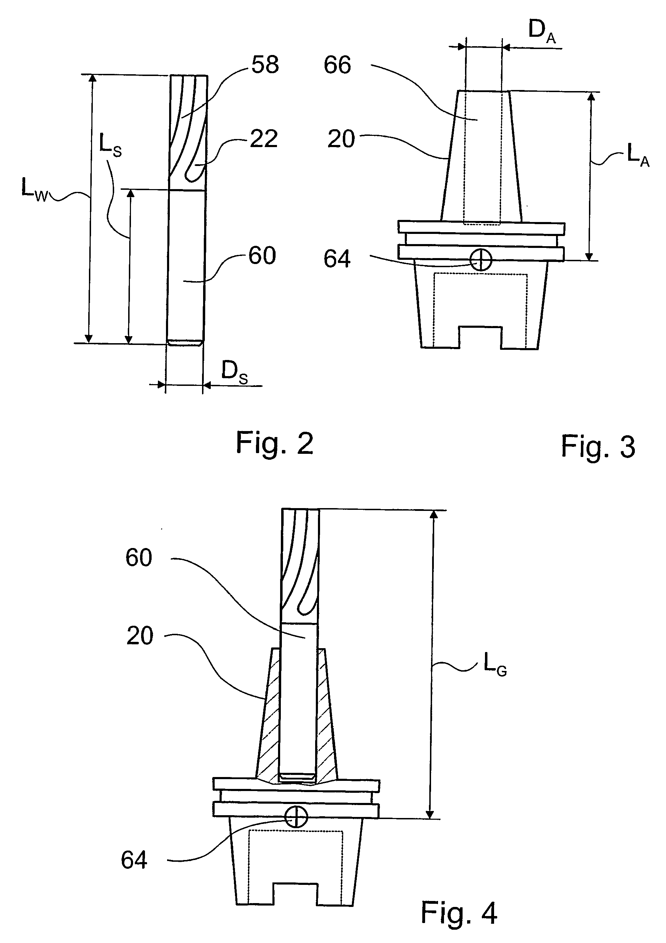

Ist das aufgrund der Längsvermessung des Werkzeugs 22 bestimmbare Sollmaß (in Figur 4 mit L_{G} bezeichnet) zuzüglich einer die Wärmeausdehnung des Werkzeugfutters 2 berücksichtigende Korrekturgröße erreicht, wird der Werkzeuggreifer 40, welcher das Werkzeug 22 hält, in seiner aktuellen Position angehalten. Das Werkzeug 22 ist nun um die Korrekturgröße von seiner Soll-Position positioniert. Nach einer Abkühlung des Werkzeugfutters 20, beispielsweise nach wenigen Sekunden, gibt der Werkzeuggreifer 40 das Werkzeug 22 frei, der Einschrumpfvorgang ist beendet. Der Werkzeuggreifer 40 wird nach oben verfahren, beispielsweise in eine Warteposition.

Nun wird die Ist-Position des Werkzeugs 22 im Werkzeugfutter 20 bestimmt, indem die Messoptik 8 die Schneide 58 des Werkzeugs 22 auf seine Ist-Position bezüglich eines Referenzpunkts 64 (Figur 4) hin vermisst. Die Ist-Position und ggf. weitere Messdaten werden auf einen am Werkzeugfutter 20 befestigten und temperaturbeständigen Chip geschrieben. Nun wird die Werkzeugspannung, mit welcher das Werkzeugfutter 20 in der Werkzeugaufnahmespindel 18 fixiert ist, gelöst. Der Werkzeugfutterwechsler 48 entnimmt das aus Werkzeugfutter 20 und Werkzeug 22 bestehende Komplettwerkzeug und setzt dieses in eine bereitstehende Be- und Entladestation 28 des Be- und Entlademagazins 24. Durch Drehung oder eine andere geeignete Bewegung wird das Komplettwerkzeug vor oder in einer Kühlstation 62 positioniert.

Die Kühlstation umfasst neben einem Platz für das Komplettwerkzeug mehrere Kühlglocken, die jeweils für unterschiedliche Werkzeugdurchmesser ausgelegt sind. Die in der Größe geeignete Kühlglocke wird ausgewählt und über das Werkzeugfutter gestülpt. Nach ausreichender und überwachter Kühlung, beispielsweise durch einen in den Figuren nicht dargestellten Infrarot-Induktor, verfährt das Komplettwerkzeug auf eine Warteposition. Weitere im Be- und Entlademagazin 24 befindliche Werkzeuge 22 können wie oben beschrieben in ein zugeordnetes Werkzeugfutter 20 eingeschrumpft, gekühlt und in Wartestellung gebracht werden.

Sind alle oder eine gewünschte Anzahl von Komplettwerkzeugen geschrumpft, wird eines der im Be- und Entlademagazin 24 befindlichen Komplettwerkzeuge mit dem Werkzeugfutterwechsler 48 in die Werkzeugaufnahmespindel 18 gesetzt und dort eingespannt. Anschließend wird die Ist-Position des Werkzeugs 22 durch die Messoptik 8 noch einmal bestimmt, und zwar bezüglich der Richtung der Einführung des Werkzeugs 22 in die Werkzeugaufnahme 66 des Werkzeugfutters 20, also in senkrechter Richtung. Die Messergebnisse und/oder die Entfernung der Schneide 58 oder eines anderen charakteristischen Elements des Werkzeugs 22 zum Referenzpunkt 64 werden auf dem Chip gespeichert. Außerdem wird das Werkzeug durch Rotation der Werkzeugaufnahmespindel 18 um mindestens eine volle Umdrehung um die Drehachse 16 gedreht, wobei aus den Messungen der Messoptik 8 durch die Recheneinheit 12 eine Hüllkurve der Schneiden 58 des Werkzeugs 22 und daraus die Ist-Position des Werkzeugs 22 in Radialrichtung ermittelt wird. Die entsprechenden Daten werden auf den Chip geschrieben. Entsprechen die ermittelten Werte nicht einem in der Recheneinheit 12 hinterlegten Toleranzband, wird das Komplettwerkzeug auf dem Chip als fehlerhaft gekennzeichnet. Nach abgeschlossener Positionsbestimmung wird das Komplettwerkzeug durch den Werkzeugfutterwechsler 48 wieder in das Be- und Entlademagazin 24 abgestellt. Es kann ein weiteres Komplettwerkzeug auf die Ist-Position des Werkzeugs 22 hin untersucht werden. Auf diese rationelle Weise können zuerst alle oder eine gewünschte Anzahl von Werkzeugen geschrumpft und abgekühlt und anschließend als Komplettwerkzeuge vermessen werden.

Zur weiteren Erläuterung von in Figur 1 nicht erkennbaren Längen und Details sei auf die Figuren 2, 3 und 4 verwiesen. Figur 2 zeigt ein Werkzeug 22, welches in ein Werkzeugfutter 20, wie es in Figur 3 dargestellt ist, einzusetzen ist. Das Werkzeug 22 weist eine Gesamtlänge L_{W} und eine Schaftlänge L_{S} auf. Der maximale Durchmesser des Werkzeugs 22 ist mit D_{S} bezeichnet. Das Werkzeugfutter 20 weist eine Einsatzbohrung 18a mit einem Durchmesser D_{A} auf. Das Werkzeugfutter 20 weist eine Werkzeugaufnahme 66 auf und ist gemäß Auslegung der verwendeten Bearbeitungsmaschine mit einem Steilkegel- oder einem Hohlkegelschaft ausgebildet. Die vertikale Länge des Werkzeugfutters 20 von einem Referenzpunkt 64 aus ist mit L_{A} bezeichnet. Zweckmäßigerweise erfolgt die Einstellung der Soll-Position des in das Werkzeugfutter 20 eingeführten Werkzeugs 22 relativ zu diesem Referenzpunkt 64. Zu diesem Zweck kann es sinnvoll sein, auch die Position des Referenzpunkts 64 mittels der Messoptik 8 zu erfassen. Dieser Sachverhalt ist in Figur 4 dargestellt, in der ein aus dem Werkzeugfutter 20 und dem Werkzeug 22 gebildetes geschrumpftes Komplettwerkzeug dargestellt ist. Man erkennt, dass die Solllänge L_{G} dieses Komplettwerkzeugs relativ zu dem Referenzpunkt 64 definiert ist. Der Referenzpunkt 64 entspricht zweckmäßigerweise der Planlage des Werkzeugfutters 20 in der Werkzeugaufnahmespindel 18, so dass es möglich ist, die genaue Position des Referenzpunkts 64 als bekannt vorauszusetzen und auf eine optische Erfassung zu verzichten.

### Bezugszeichen

- 2: Einstell- und Messeinrichtung
- 4: Schlitten
- 6: Optikträger
- 8: Messoptik
- 10: Bedieneinheit
- 12: Recheneinheit
- 14: Monitor
- 16: Drehachse
- 18: Werkzeugaufnahmespindel
- 20: Werkzeugfutter
- 22: Werkzeug
- 24: Be- und Entlademagazin
- 26: Drehachse
- 28: Be- und Entladestation
- 30: Werkzeugaufnahme
- 32: Aufnahme
- 34: Kühleinheit
- 36: Einbringeinheit
- 38: Vertikalschlitten
- 40: Werkzeuggreifer
- 42: Querschlitten
- 44: Induktionsspule
- 46: Achse
- 48: Werkzeugfutterwechsler
- 56: Entnahmeposition
- 58: Schneide
- 60: Schaft
- 62: Kühlstation
- 64: Referenzpunkt
- 66: Werkzeugaufnahme
- L_{A}: Referenzpunkt
- L_{G}: Sollmaß
- L_{W}: Gesamtlänge
- L_{S}: Schaftlänge
- D_{A}: Durchmesser
- D_{S}: Durchmesser des Werkzeugs

## Patentansprüche

1. Verfahren zum Befestigen eines Werkzeugs (22) in einem Werkzeugfutter (20), bei dem eine Ist-Position des Werkzeugs (22), insbesondere in Richtung der Längsachse des Werkzeugs (22), durch Messung bestimmt wird, das Werkzeug (22) anschließend in das Werkzeugfutter (20) eingeführt, dort positioniert und dann eingeschrumpft wird und nach dem Einschrumpfen die Ist-Position des Werkzeugs (22) im Werkzeugfutter (20) bestimmt wird, wobei die Positionierung auf der Grundlage der ermittelten Ist-Position erfolgt, **dadurch gekennzeichnet, dass** auf der Grundlage der ermittelten Ist-Position ein Verfahrweg ermittelt wird und das Werkzeug (22) über diesen ermittelten Verfahrweg mit einem Werkzeuggreifer (40) in das Werkzeugfutter (20) eingeführt wird.

2. Verfahren nach Anspruch 1,
**dadurch gekennzeichnet,**
**dass** die Ist-Position des Werkzeugs (22) während des Einführens des Werkzeugs (22) in das Werkzeugfutter (20) überwacht wird.

3. Verfahren nach Anspruch 1 oder 2,
**dadurch gekennzeichnet,**
**dass** das Werkzeug (22) während des Einschrumpfens von einem Werkzeuggreifer (40) gehalten wird, der das Werkzeug (22) auch während des Vermessens gehalten hat.

4. Verfahren nach einem der vorhergehenden Ansprüche,
**dadurch gekennzeichnet,**
**dass** das Werkzeugfutter (20) während des Einschrumpfens in einer Spindel (18) befestigt ist und erst nach der Bestimmung der Ist-Position aus der Spindel (18) genommen wird.

5. Verfahren nach einem der vorhergehenden Ansprüche,
**dadurch gekennzeichnet,**
**dass** eine Anzahl von Werkzeugen (22) in jeweils ein zugeordnetes Werkzeugfutter (20) eingeschrumpft und zusammen mit dem Werkzeugfutter (20) in einem Be- und Entlademagazin (24) abgelegt wird und anschließend die Ist-Position der Werkzeuge (22) in den Werkzeugfuttern (20) bestimmt wird.

6. Verfahren nach einem der vorhergehenden Ansprüche,
**dadurch gekennzeichnet,**
**dass** das Werkzeug (22) im Werkzeugfutter (20) um eine Korrekturgröße entfernt von der Soll-Position positioniert wird.

7. Verfahren nach einem der vorhergehenden Ansprüche,
**dadurch gekennzeichnet,**
**dass** die Position nach der Ist-Positionsbestimmung auf einen mit dem Werkzeugfutter (20) verbundenen Datenträger geschrieben wird.

8. Verfahren nach einem der vorhergehenden Ansprüche,
**dadurch gekennzeichnet, dass**
die Ist-Position berührungslos gemessen wird.

9. Verfahren nach einem der vorhergehenden Ansprüche,
**dadurch gekennzeichnet, dass** die Ist-Position über die Ist-Position eines Elements aus der Gruppe Schneide, Ecke, Kante und Spitze bestimmt wird.

10. Verfahren nach einem der vorhergehenden Ansprüche,
**dadurch gekennzeichnet, dass** die Ist-Position des Werkzeugs (22) bezüglich eines Referenzpunkts auf dem Werkzeugfutter (20) definiert wird.

11. Verfahren nach einem der vorhergehenden Ansprüche,
**dadurch gekennzeichnet, dass** das Werkzeug (22) vor der Bestimmung der Ist-Position außerhalb des Werkzeugfutters (20) vor einer Messoptik (8) um eine Drehachse (16) gedreht wird.

12. Verfahren nach einem der vorhergehenden Ansprüche,
**dadurch gekennzeichnet, dass** das Werkzeug (22) während des Vermessens von einem Werkzeuggreifer (40) gehalten wird.

13. Verfahren nach Anspruch 12,
**dadurch gekennzeichnet, dass** das Werkzeug (22) zum Vermessen konzentrisch zu einer Drehachse (16) der Spindel (18) gehalten wird.

14. Verfahren nach Anspruch 12 oder 13,
**dadurch gekennzeichnet, dass** der Werkzeuggreifer (40) in der Lage ist, das Werkzeug (22) um seine Drehachse (16) zu drehen.

15. Verfahren nach einem der vorhergehenden Ansprüche,
**dadurch gekennzeichnet, dass** die Bestimmung der Ist-Position nach dem Einschrumpfen in Radialrichtung bezüglich einer Werkzeugachse erfolgt.

16. Verfahren nach einem der vorhergehenden Ansprüche,
**dadurch gekennzeichnet, dass** eine unbeabsichtigte Bewegung des Werkzeugs (22) beim Einführen erkannt wird.

17. Verfahren nach einem der vorhergehenden Ansprüche,
**dadurch gekennzeichnet, dass** die Ist-Position unmittelbar nach dem Einschrumpfen bestimmt wird.

18. Verfahren nach Anspruch 17,
**dadurch gekennzeichnet, dass** die unmittelbar nach dem Einschrumpfen bestimmte Ist-Position mit einer später ermittelten Ist-Position nach Abkühlen des Werkzeugfutters (20) verglichen wird.

19. Verfahren nach einem der vorhergehenden Ansprüche,
**dadurch gekennzeichnet, dass** das Werkzeugfutter (20) zum Einschrumpfen erwärmt wird und die Temperatur des Werkzeugfutters (20) vor dem Positionieren des Werkzeugs (22) mit einem Sensor überwacht wird.

20. Verfahren nach einem der vorhergehenden Ansprüche,
**dadurch gekennzeichnet, dass** das Werkzeugfutter (20) in eine um eine Drehachse (26) drehbare Spindel (18)aufgenommen ist.

21. Verfahren nach einem der vorhergehenden Ansprüche,
**dadurch gekennzeichnet, dass** das Be- und Entlademagazin um eine Drehachse (26) drehbar ausgeführt ist.

22. Verfahren nach einem der vorhergehenden Ansprüche,
**dadurch gekennzeichnet, dass** das Werkzeug (22) durch eine Drehung des Be- und Entlademagazins vor oder in einer Kühlstation positioniert wird.

23. Einstell- und Messeinrichtung (2) zum Befestigen eines Werkzeugs (22) in einem Werkzeugfutter (20) gemäß einem Verfahren nach einem der vorhergehenden Ansprüche, mit einer Messoptik (8) zum Erfassen der Ist-Position des Werkzeugs (22), **gekennzeichnet durch** Mitteln zur Ermittlung eines Verfahrweges des Werkzeugs auf der Grundlage der ermittelten Ist-Position und einen Werkzeuggreifer (40) zum Einführen des Werkzeugs (22) in das Werkzeugfutter (20) über diesen ermittelten Verfahrweg.

24. Einstell- und Messeinrichtung (2) nach Anspruch 23,
**dadurch gekennzeichnet, dass** der Werkzeuggreifer (40) in der Lage ist, das Werkzeug (22) um seine Drehachse (16) zu drehen.

25. Einstell- und Messeinrichtung (2) zumindest nach Anspruch 23,
**gekennzeichnet durch** einen Sensor, zur Erfassung der Temperatur des Werkzeugfutters (20) vor dem Positionieren des Werkzeugs (22).

26. Einstell- und Messeinrichtung (2) zumindest nach Anspruch 23,
**gekennzeichnet durch** ein Be- und Entlademagazin, das um eine Drehachse (26) drehbar ausgeführt ist.

## Claims

1. A method of fastening a tool (22) in a tool chuck (20), in which an actual position of the tool (22), in particular in the direction of the longitudinal axis of the tool (22), is determined by measurement, the tool (22) is then inserted into the tool chuck (20), positioned there and shrunk in place, and the actual position of the tool (22) in the tool chuck (20) is determined after the shrink fitting, whereby the positioning is effected on the basis of the actual position determined, **characterized in that** a traverse path is determined on the basis of the actual position determined and the tool (22) is inserted into the tool chuck (20) by means of a tool gripper (40) by the traverse path determined.

2. The method as claimed in claim 1, **characterized in that** the actual position of the tool (22) is monitored during the insertion of the tool (22) into the tool chuck (20).

3. The method as claimed in claim 1 or 2, **characterized in that**, during the shrink fitting, the tool (22) is held by a tool gripper (40) which has also held the tool (22) during the measuring.

4. The method as claimed in one of the preceding claims, **characterized in that** the tool chuck (20) is fastened in a spindle (18) during the shrink fitting and is not removed from the spindle (18) until after the actual position has been determined.

5. The method as claimed in one of the preceding claims, **characterized in that** a number of tools (22) are shrunk in place in a respective associated tool chuck (20) and are deposited together with the tool chuck (20) in a loading and unloading magazine (24), and then the actual position of the tools (22) in the tool chucks (20) is determined.

6. The method as claimed in one of the preceding claims, **characterized in that** the tool (22) is positioned in the tool chuck (20) at a distance from the desired position, this distance corresponding to a correction size.

7. The method as claimed in one of the preceding claims, **characterized in that** the position is written to a data carrier, connected to the tool chuck (20), after the actual position has been determined.

8. The method as claimed in one of the preceding claims, **characterized in that** the actual position is determined in a non-contact manner.

9. The method as claimed in one of the preceding claims, **characterized in that** the actual position is determined via the actual position of an element from the group comprising cutting edge, corner, edge and tip.

10. The method as claimed in one of the preceding claims, **characterized in that** the actual position of the tool (22) is defined with regard to a reference point on the tool chuck (20).

11. The method as claimed in one of the preceding claims, **characterized in that** the tool (22), before the determination of the actual position, is rotated about a rotation axis (16) outside the tool chuck (20) in front of an optical measuring system (8).

12. The method as claimed in one of the preceding claims, **characterized in that** the tool (22) is held by a tool gripper (40) during the measuring.

13. The method as claimed in claim 12, **characterized in that** the tool (22), for the measuring, is held concentrically to a rotation axis (16) of the spindle (18).

14. The method as claimed in claim 12 or 13, **characterized in that** the tool gripper (40) is able to rotate the tool (22) about its rotation axis (16).

15. The method as claimed in one of the preceding claims, **characterized in that** the determination of the actual position takes place after the shrink fitting in a radial direction relative to a tool axis.

16. The method as claimed in one of the preceding claims, **characterized in that** an unintentional movement of the tool (22) during the insertion is detected.

17. The method as claimed in one of the preceding claims, **characterized in that** the actual position is determined immediately after the shrink fitting.

18. The method as claimed in claim 17, **characterized in that** the actual position determined immediately after the shrink fitting is compared with a subsequently determined actual position after the tool chuck (20) has cooled down.

19. The method as claimed in one of the preceding claims, **characterized in that** the tool chuck (20) is heated for the shrink fitting and the temperature of the tool chuck (20) is monitored by means of a sensor before the positioning of the tool (22).

20. The method as claimed in one of the preceding claims, **characterized in that** the tool chuck (20) is mounted in a spindle (18) rotatable about a rotation axis (26).

21. The method as claimed in one of the preceding claims, **characterized in that** the loading and unloading magazine is designed to be rotatable about a rotation axis (26).

22. The method as claimed in one of the preceding claims, **characterized in that** the tool (22) is positioned in front of or in a cooling station by rotation of the loading and unloading magazine.

23. Setting and measuring device (2) for fastening a tool (22) in a tool chuck (20) according to a method as claimed in one of the preceding claims, comprising an optical measuring system (8) for detecting the actual position of the tool (22), **characterized by** means for determining a traverse path of the tool (22) on the basis of the actual position determined and by a tool gripper (40) for introducing the tool (22) into the tool chuck (20) by the traverse path determined.

24. Setting and measuring device (2) as claimed in claim 23, **characterized in that** the tool gripper (40) is able to rotate the tool (22) about its rotation axis (16).

25. Setting and measuring device (2) as claimed at least in claim 23, **characterized by** a sensor for detecting the temperature of the tool chuck (20) before the positioning of the tool (22).

26. Setting and measuring device (2) as claimed at least in claim 23, **characterized by** a loading and unloading magazine being designed to be rotatable about a rotation axis (26).

## Revendications

1. Procédé de fixation d'un outil (22) dans un mandrin à outil (20), dans lequel la position effective de l'outil (22), en particulier dans la direction de l'axe longitudinal de l'outil (22), est déterminée par mesure, l'outil (22) est ensuite inséré dans le mandrin à outil (20), y est positionné et ensuite serré, et après le serrage, la position effective de l'outil (22) dans le mandrin à outil (20) est déterminée, le positionnement s'effectuant sur base de la position effective déterminée, **caractérisé en ce qu'**un parcours de déplacement est déterminé sur base de la position effective déterminée, et **en ce que** l'outil (22) est inséré dans le mandrin à outil (20) à l'aide d'un dispositif (40) de saisie d'outil sur le parcours de déplacement déterminé.

2. Procédé selon la revendication 1, **caractérisé en ce que** la position effective de l'outil (22) est surveillée pendant l'insertion de l'outil (22) dans le mandrin à outil (20).

3. Procédé selon la revendication 1 ou 2, **caractérisé en ce que**, pendant le serrage, l'outil (22) est maintenu par le dispositif (40) de saisie d'outil qui a également maintenu l'outil (22) pendant la mesure.

4. Procédé selon l'une des revendications précédentes, **caractérisé en ce que** pendant le serrage, le mandrin à outil (20) est fixé dans une broche (18) et n'est enlevé de la broche (18) qu'après la détermination de la position effective.

5. Procédé selon l'une des revendications précédentes, **caractérisé en ce qu'**un certain nombre d'outils (22) sont chacun serrés dans des mandrins à outil (20) respectifs et sont déposés avec le mandrin à outil (20) dans un magasin (24) de chargement et de déchargement et la position effective des outils (22) dans les mandrins à outil (20) est ensuite déterminée.

6. Procédé selon l'une des revendications précédentes, **caractérisé en ce que** l'outil (22) est placé dans le mandrin à outil (20) à une distance de la position de consigne, cette distance correspondant à une grandeur de correction.

7. Procédé selon l'une des revendications précédentes, **caractérisé en ce qu'**après la détermination de la position effective, la position est conservée dans un support de données relié au mandrin à outil (20).

8. Procédé selon l'une des revendications précédentes, **caractérisé en ce que** la position effective est mesurée sans contact.

9. Procédé selon l'une des revendications précédentes, **caractérisé en ce que** la position effective est déterminée à partir de la position effective d'un élément du groupe constitué des tranchants, des coins, des bords et des pointes.

10. Procédé selon l'une des revendications précédentes, **caractérisé en ce que** la position effective de l'outil (22) est définie par rapport à un point de référence situé sur le mandrin à outil (20).

11. Procédé selon l'une des revendications précédentes, **caractérisé en ce qu'**avant la détermination de la position effective, l'outil (22) est tourné à l'extérieur du mandrin à outil (20) autour d'un axe de rotation (16) et devant une optique de mesure (8).

12. Procédé selon l'une des revendications précédentes, **caractérisé en ce que** pendant la mesure, l'outil (22) est maintenu par un dispositif (40) de saisie d'outil.

13. Procédé selon la revendication 12, **caractérisé en ce que** pour la mesure, l'outil (22) est maintenu concentriquement par rapport à un axe de rotation (16) de la broche (18).

14. Procédé selon la revendication 12 ou 13, **caractérisé en ce que** le dispositif (40) de saisie d'outil est en mesure de tourner l'outil (22) autour de son axe de rotation (16).

15. Procédé selon l'une des revendications précédentes, **caractérisé en ce que** la détermination de la position effective s'effectue après le serrage dans une direction radiale par rapport à un axe de l'outil.

16. Procédé selon l'une des revendications précédentes, **caractérisé en ce qu'**un déplacement intempestif de l'outil (22) lors de son insertion est détecté.

17. Procédé selon l'une des revendications précédentes, **caractérisé en ce que** la position effective est déterminée immédiatement après le serrage.

18. Procédé selon la revendication 17, **caractérisé en ce que** la position effective déterminée immédiatement après le serrage est comparée à une position effective déterminée ultérieurement, après le refroidissement du mandrin à outil (20).

19. Procédé selon l'une des revendications précédentes, **caractérisé en ce que** pour le serrage, le mandrin à outil (20) est chauffé et **en ce que** la température du mandrin à outil (20) est surveillée par une sonde avant que l'outil (22) soit positionné.

20. Procédé selon l'une des revendications précédentes, **caractérisé en ce que** le mandrin à outil (20) est repris dans une broche (18) qui peut tourner autour d'un axe de rotation (26).

21. Procédé selon l'une des revendications précédentes, **caractérisé en ce que** le magasin de chargement et de déchargement est configuré de manière à pouvoir tourner autour d'un axe de rotation (26).

22. Procédé selon l'une des revendications précédentes, **caractérisé en ce que** l'outil (22) est placé devant ou dans un poste de refroidissement par une rotation du magasin de chargement et de déchargement.

23. Dispositif (2) de réglage et de mesure destiné à fixer un outil (22) dans un mandrin à outil (20) par un procédé selon l'une des revendications précédentes, et qui présente une optique de mesure (8) qui détecte la position effective de l'outil (22), **caractérisé par** des moyens de détermination d'un parcours de déplacement de l'outil sur base de la position effective déterminée et par un dispositif (40) de saisie d'outil qui insère l'outil (22) dans le mandrin à outil (20) sur le parcours de déplacement ainsi déterminé.

24. Dispositif (2) de réglage et de mesure selon la revendication 23, **caractérisé en ce que** le dispositif (40) de saisie d'outil est en mesure de faire tourner l'outil (22) autour de son axe de rotation (16).

25. Dispositif (2) de réglage et de mesure selon au moins la revendication 23, **caractérisé par** un détecteur qui détecte la température du mandrin à outil (20) avant le positionnement de l'outil (22).

26. Dispositif (2) de réglage et de mesure selon au moins la revendication 23, **caractérisé par** un magasin de chargement et de déchargement configuré de manière à pouvoir tourner autour d'un axe de rotation (26).
